(19) Europäisches Patentamt
European Patent Office
Office européen des brevets

(11) EP 2 682 896 B1

(12) **EUROPEAN PATENT SPECIFICATION**

(45) Date of publication and mention
of the grant of the patent:
**08.08.2018 Bulletin 2018/32**

(51) Int Cl.:
***G06K 9/00*** *(2006.01)*

(21) Application number: **13173920.3**

(22) Date of filing: **27.06.2013**

(54) **In-vehicle apparatus**

Fahrzeuginnenraumvorrichtung

Appareil embarqué

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2012 JP 2012149862**

(43) Date of publication of application:
**08.01.2014 Bulletin 2014/02**

(73) Proprietor: **Clarion Co., Ltd.**
**Saitama 330-0081 (JP)**

(72) Inventors:
• **Kiyohara, Masahiro**
**Tokyo, 100-8220 (JP)**
• **Irie, Kota**
**Saitama, 330-0081 (JP)**
• **Takemura, Masayuki**
**Tokyo, 100-8220 (JP)**
• **Nakamura, Katsuyuki**
**Tokyo, 100-8220 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A1- 2 351 351          EP-A1- 2 698 981
WO-A2-2008/089966          JP-A- 2005 162 168

**Description**

The present invention relates to an in-vehicle apparatus.

A partition line recognizing device known in the related art, which photographs a white line on the road upon which a vehicle is traveling via a camera installed in the vehicle, determines that a partition line is recognized if a recognition rate of the photographed white line is greater than a preset threshold value and determines that the partition line is not recognized if their recognition rate is smaller than the threshold value. The device includes a stain detection unit that detects any stains adhering to the camera or the windshield of the vehicle so as to be able to adjust the threshold value when the stain detection unit detects stains on the camera or the windshield (see Japanese Laid Open Patent Publication no. 2003-44863).

In addition, there is an obstacle detecting device proposed for use in vehicular applications in the related art that excludes foreign matter adhering to the camera lens belonging to a camera installed in a vehicle and part of the subject vehicle photographed by the camera from the detection target range so as to improve the obstacle detection accuracy. It is further able to issue a warning to the driver of the vehicle based upon the ratio of foreign matter and the like excluded from the detection target range, to automatically halt the obstacle detecting operation and to report to the vehicle driver that the obstacle detection operation has been halted (see Japanese Laid Open Patent Publication no. 2012-038048). In JP 2005 162168 A, a rear wiper device capable of automatically operating a rear wiper without operating a front wiper when a vehicle is started backward in rainfall is described. For that matter a reference line is added to a bumper provided at a rear part of the vehicle. There is an issue in the related art in that since images of matter adhering to the camera or the windshield are mixed among images of other objects, erroneous detection of adhering matter may occur. There is another issue that must be addressed in the related art in that while an immobile area in an image is extracted, the immobile area cannot be determined to correspond to the subject vehicle body or to foreign matter adhering to the camera lens, which makes it impossible to determine the shielded area to be set for the photographing device.

According to the present invention as defined in the claims, matter adhering to a camera lens can be detected in an optimal manner.

BRIEF DESCRIPTION OF THE DRAWINGS

FIG. 1 is a block diagram of the structure adopted in the in-vehicle apparatus achieved in a first embodiment of the present invention.
FIG. 2 illustrates the photographing area and the shielded area set for the camera.
FIG. 3 presents an example of a camera installation position.
FIG. 4 is a control block diagram pertaining to the control executed in the in-vehicle apparatus achieved in the first embodiment of the present invention.
FIG. 5 presents an example of a photographic image that may be captured with the camera.
FIG. 6 illustrates how a difference image is generated.
FIGS. 7A and 7B illustrate how a decision is made with regard to the shape of adhering matter.
FIG. 8 presents a control flowchart showing how control may be executed in the in-vehicle apparatus in the first embodiment of the present invention.
FIG. 9 presents a control flowchart showing how control may be executed in the in-vehicle apparatus in the first embodiment of the present invention.

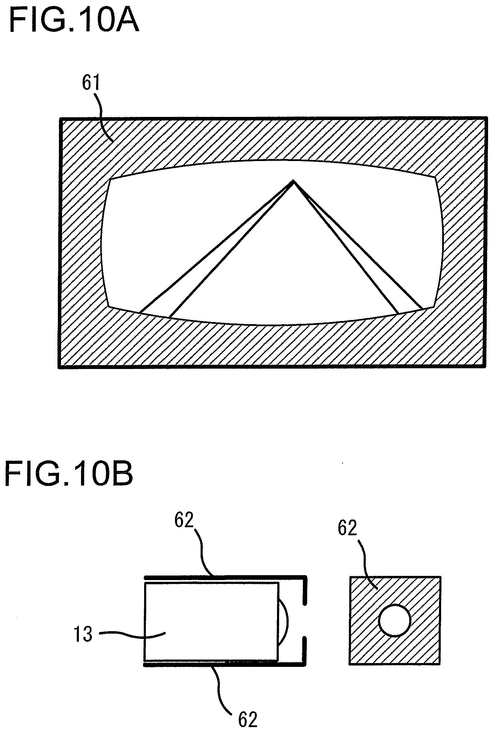

FIGS. 10A and 10B present an example of a variation pertaining to the shielding plate included in the camera.
FIG. 11 is a control block diagram pertaining to the control executed in the in-vehicle apparatus achieved in s second embodiment of the present invention.
FIGS. 12A and 12B indicate positional relationships that may be assumed by the camera and the shielding plate.
FIG. 13 is a control block diagram pertaining to the control executed for the shielding area-setting unit.
FIG. 14 presents a flowchart of processing that may be executed to calculate the shielding plate area boundary.

DESCRIPTION OF PREFERRED EMBODIMENTS

(First Embodiment)

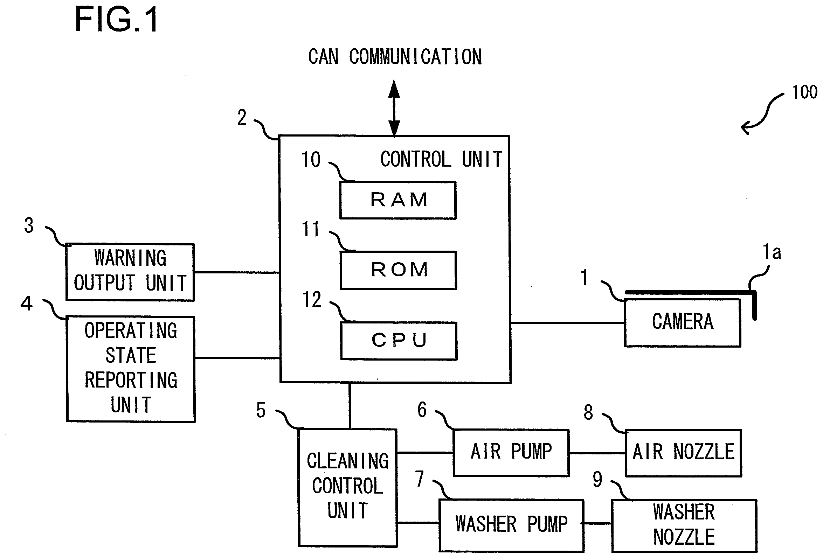

FIG. 1 is a block diagram showing the structure adopted in an in-vehicle (in-car or onboard) apparatus 1 achieved in the first embodiment of the present invention. The in-vehicle apparatus 100 in the figure, installed in a vehicle, includes a camera 1 with a shielding plate 1a mounted thereat, a control unit 2, a warning output unit 3, an operating state reporting unit 4, a cleaning control unit 5, an air pump 6, a washer pump 7, an air nozzle 8 and a washer nozzle 9.

The camera 1, installed so as to face the space to the rear of the vehicle, photographs (or captures) an image within a photographing area, which includes the surface of the road to the rear of the vehicle, after each time interval set to a specific time length. This camera 1 may be constituted with an image sensor such as a CCD image sensor or a CMOS image sensor. The photographic image obtained via the camera 1 is output from the camera 1 to the control unit 2.

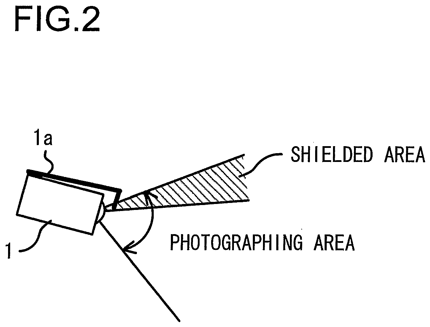

The shielding plate 1a is mounted at the camera 1 so as to block part of light advancing toward the photographic lens in the camera 1. FIG. 2 illustrates the photographing area and a shielded area assumed for the camera 1 in a lateral view of the camera. As FIG. 2 indicates, the shielded area is formed by the shielding plate 1a masking part of the photographing area of the camera 1, and more specifically, masking a portion of the photographing area on its upper side. The camera 1 photographs an image, which includes the surface of the road present to the rear of the vehicle, over the photographing area excluding the shielded area. A relatively large photographing area (may be otherwise referred to as the angle of view or the photographic field angle) is set for the camera so as to allow the camera to photograph the surface of the road present to the rear of the vehicle over a sufficiently large range along the left/right direction and, for this reason, unnecessary light other than the light from the road surface, e.g., light from the sky or a background object, would also enter the camera 1. Accordingly, the shielded area is formed with the shielding plate 1a in order to block such unwanted incident light that would otherwise enter the camera 1.

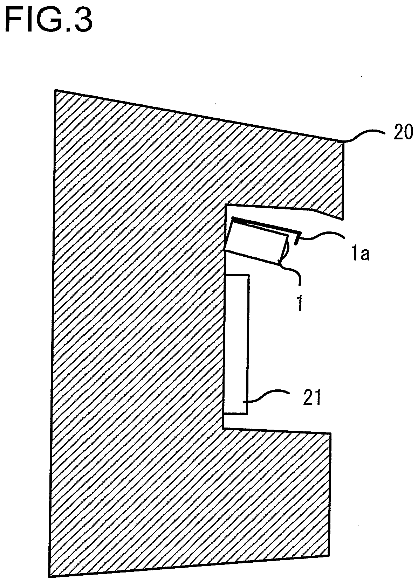

FIG. 3. presents an example of an installation position at which the camera 1 may be mounted. A number plate 21 is mounted at a body 20 over an area at the rear of the subject vehicle. The camera 1 is mounted directly above the number plate 21 so as to face diagonally downward, with the shielding plate 1a disposed over the camera 1. It is to be noted that the installation position shown in the figure is simply an example and that the camera 1 may be installed at another position. In other words, the installation position at which the camera 1 is to be installed may the determined freely, as long as it is ensured that the camera 1 is able to photograph the surface of the road present to the rear of the vehicle over an optimal range.

The control unit 2, which includes a RAM 10, a ROM 11 and a CPU 12, stores photographic images originating from the camera 1 into the RAM 10, executes specific types of image processing by using the photographic images and then executes various types of control in correspondence to the processing results. Through the control executed by the control unit 2, various functions of the in-vehicle apparatus 100, such as an LDW (lane departure warning) function, a BSW (blind spot warning) function, an MOD (moving object detection) function and an IMD (image diagnosis) function, are realized. The LDW is a function that enables the in-vehicle apparatus 100 to output a warning whenever the subject vehicle is likely to move out of the lane in which it is currently traveling by detecting a white line on the road surface (e.g., a lane boundary, a road shoulder line or a centerline) in the photographic images. The BSW is a function that enables the in-vehicle apparatus 100 to issue a warning for the driver indicating the presence of a vehicle that may collide with the subject vehicle as the subject vehicle changes lanes or the like by detecting other vehicles traveling on the road in the photographic images. The MOD is a function that enables the in-vehicle apparatus 100 to inform the driver of the presence of a moving object in the vicinity of the subject vehicle when it is driven in reverse gear or the like by detecting moving objects in the photographic images. The IMD is a function that enables the in-vehicle apparatus 100 to execute diagnosis to determine whether or not the camera 1 is photographing images correctly.

The warning output unit 3 outputs a warning for the vehicle driver via a warning lamp, a warning buzzer or the like. The operation of this warning output unit 3 is controlled by the control unit 2. When the in-vehicle apparatus determines that the subject vehicle is about to move out of the current lane through the LDW function described earlier or when a vehicle that may collide with the subject vehicle is detected through the BSW function described earlier, for instance, a warning is output by the warning output unit 3 under control executed by the control unit 2.

The operating state reporting unit 4 reports the operating state of the in-vehicle apparatus 100 to the vehicle driver. For instance, if predetermined operating conditions are not satisfied and the in-vehicle apparatus 100 is in a non-operating state, a lamp constituting the operating state reporting unit 4, installed near the driver's seat in the vehicle, is lit under control executed by the control unit 2. As a result, the driver is informed that the in-vehicle apparatus 100 is currently in the non-operating state.

The cleaning control unit 5, engaged in operation under control executed by the control unit 2, controls operations of the air pump 6 and the washer pump 7. For instance, when the in-vehicle apparatus determines through the IMD function described earlier that the camera 1 is not photographing images correctly due to matter such as condensation, mud or a snow-melting agent, adhering to the camera 1, the control unit 2 outputs a control signal for the cleaning control unit 5, requesting that the photographic lens be cleaned. In response to this signal, the cleaning control unit 5 controls the operations of the air pump 6 and the washer pump 7.

The air pump 6, engaged in operation under control executed by the cleaning control unit 5, outputs compressed air to the air nozzle 8. As this compressed air is forced through the air nozzle 8 toward the camera 1, matter adhering to the photographic lens of the camera 1, such as condensation, is blown off the photographic lens.

The washer pump 7, engaged in operation under control executed by the cleaning control unit 5, outputs a washing solution supplied from a washer tank (not shown) to the washer nozzle 9. As this washing solution is sprayed via the washer nozzle 9 toward the camera 1, matter such as mud adhering to the photographic lens of the camera 1, which cannot be removed with compressed air from the air nozzle 8, is washed off the photographic lens.

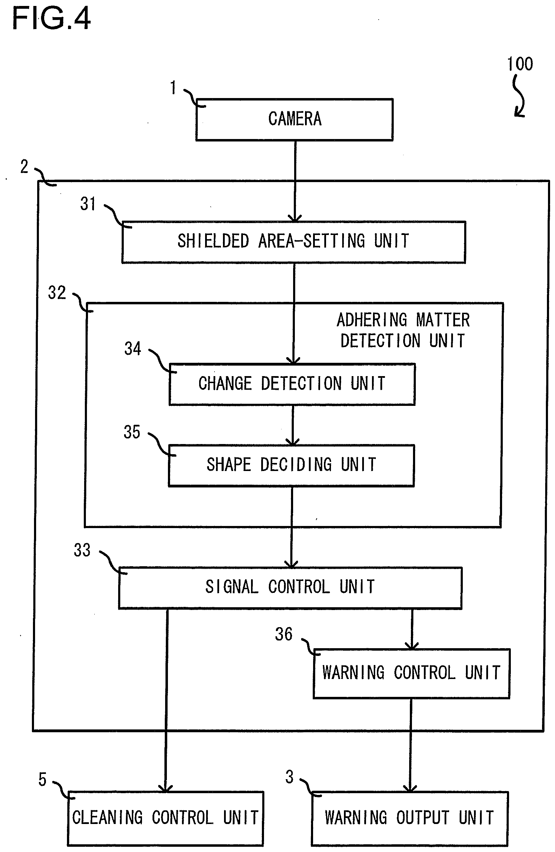

FIG. 4 is a control block diagram, representing an example of control that may be executed in the in-vehicle apparatus achieved in the embodiment of the present invention. The control unit 2 in the in-vehicle apparatus 100 in FIG. 4 functions as a shielded area-setting unit 31, an adhering matter detection unit 31, a signal control unit 33 and a warning control unit 36.

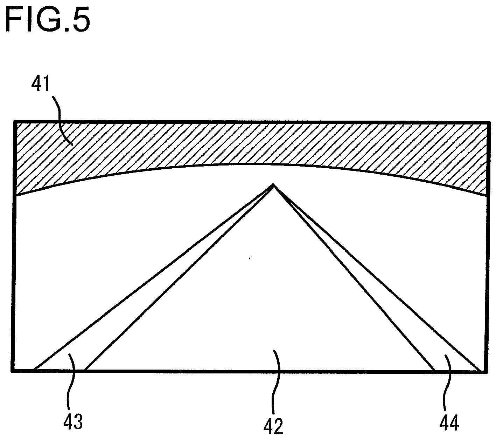

FIG. 5 provides an illustration in reference to which the shielded area-setting unit 31 will be described. The shielded area-setting unit 31 sets an image area, such as the hatched image area 41 in FIG. 5, which corresponds to the shielded area in FIG. 2, for photographic images output from the camera 1. In the following description, this image area will be referred to as a shielded image area and the image in the shielded image area will be referred to as a shielded image. It is to be noted that FIG. 5 shows a road surface 42 of the lane in which the subject vehicle is currently traveling, and a white line 43 and a white line 44 painted on the road surface to define the traveling lane, which are photographed over the image area other than the shielded image area 41 and will be used in conjunction with the LDW function.

The adhering matter detection unit 32 detects matter adhering to the photographic lens based upon shielded images. The adhering matter detection unit 32, which includes a change detection unit 34 and a shape decision-making unit 35, detects matter adhering to the photographic lens via these units.

The change detection unit 34 detects a change manifesting in shielded images based upon a plurality of photographic images output from the camera 1 at different time points. The change detection unit 34 generates an image, to be referred to as a difference image, based upon the plurality of photographic images as detection results.

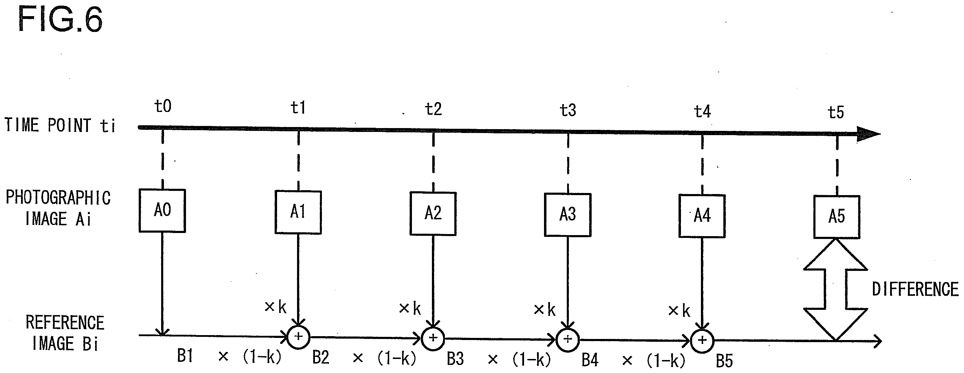

In reference to FIG. 6, a method that may be adopted when generating the difference image will be described. The difference image is generated by calculating the difference between the most recently photographed image and a reference image. The reference image is generated based upon past photographic images preceding the most recent photographic image, having been successively output from the camera 1 in time series.

FIG. 6 includes an arrow representing the passage of time, with time points $t_0$ through $t_5$ above the arrow marking time intervals corresponding to the frame rate of the camera 1. $A_0$ through $A_5$ under the arrow representing the passage of time respectively indicate photographic images output from the camera 1 at the time points $t_0$ through $t_5$.

The photographic images $A_0$ through $A_5$ are each stored into the RAM 10 as it is output from the camera 1 and thus, the photographic images are accumulated in the RAM 10. It is assumed that the accumulation of the photographic images into the RAM 10 starts at the time point $t_0$. Namely, the photographic image $A_0$ is the oldest photographic image among the photographic images stored in the RAM 10 and the photographic image $A_5$ is the newest photographic image, most recently stored into the RAM 10 in FIG. 6.

When a new photographic image $A_i$ is output from the camera 1 (e.g., at that time point $t_5$), a reference image $B_i$ is generated as expressed in [1] or [2] below by using an immediately preceding photographic image $A_{i-1}$ having been most recently starred into the RAM 10 (e.g., the photographic image $A_4$) and a current reference image $B_{i-1}$ being used for reference up to the point at which the photographic image $A_i$ is output.

$$B_i = A_{i-1} \ (\text{if } i = 1) \dots [1]$$

$$B_i = k \times A_{i-1} + (1 - k) \times B_{i-1} \ (\text{if } i \geq 2) \dots [2]$$

k in the expression above is a coefficient taking a value in the range of $0 < k \leq 1$. For instance, k = 0.1.

The change detection unit 34 generates a difference image representing the difference between the newest photographic image (e.g., the photographic image $A_5$ output from the camera 1) and a reference image corresponding to the time point at which the newest photographic image is output (e.g., the reference image $B_5$).

It is to be noted that the change detection unit 34 may further execute subroutines, which may be referred to as a gain decision-making unit, a cloudiness decision-making unit, an ambient light source decision-making unit, a weather decision-making unit and a day/night decision-making unit, in addition to the difference image generation. The change detection unit 34 should be able to control the difference image generation and the shape decision-making unit 35 through these subroutines.

The gain decision-making unit monitors the sensitivity at the camera 1 and makes a decision as to whether or not the sensitivity has been altered (whether or not the gain has been adjusted). The sensitivity at the camera 1 is altered as the brightness of the photographic images changes drastically, e.g., as the subject vehicle enters a tunnel. If the sensitivity at the camera 1 is altered, the gain decision-making unit attributes changes in the photographic images to the alteration in the sensitivity at the camera 1 and accordingly, does not execute adhering matter detection based upon the difference image so as to prevent erroneous detection of adhering matter.

The cloudiness decision-making unit makes a decision as to whether or not the photographic lens has been rendered into a cloudy state (white turbidness) by adhering matter such as water condensation. The cloudiness decision-making unit may execute edge detection processing of the known art on photographic images output from the camera 1 and decide that the photographic lens is in a cloudy state if the edge intensity of edges detected through the edge detection processing is low. The change detection unit 34 adjusts a threshold value set in conjunction with the shape decision-making unit 35 if the cloudiness decision-making unit decides that the photographic lens is in a cloudy state.

The ambient light source decision-making unit makes a decision as to whether or not the camera 1 is illuminated by an ambient light source such as the headlights of a vehicle traveling behind the subject vehicle or a street lamp. If it is decided that the camera 1 is illuminated by an ambient light source, the change detection unit 34 executes control so as to reset the storage of photographic images, to be used for purposes of reference image generation, into the RAM 10, for instance. The decision as to whether or not the camera 1 is illuminated by an ambient light source may be made based upon a signal output from a light detection sensor installed, for instance, in the vicinity of the camera 1.

The weather decision-making unit makes a decision as to whether the weather around the subject vehicle is fair. The weather decision-making unit may make the decision as to whether or not the weather is fair by, for instance, ascertaining the operating state of the windshield wipers in the vehicle through CAN communication. If the weather decision-making unit decides that the weather around the subject vehicle is fair, it adjusts a threshold value set for the shape decision-making unit 35. It is to be noted that the decision as to whether or not the weather is fair may be made by ascertaining whether or not the sun is recognized in the photographic images.

The day/night decision-making unit makes a decision as to whether it is daytime or nighttime. The day/night decision-making unit may decide that it is nighttime if the overall brightness of the photographic images output from the camera 1 is equal to or less than a predetermined value, i.e., if the photographic images output from the camera 1 are dark. Based upon the decision-making results, the day/night decision-making unit adjusts a threshold value set for the shape decision-making unit 35.

The shape decision-making unit 35 makes a decision as to whether or not an aggregate of pixels expressing a single color, included in the difference image having been generated by the change detection unit 34, represents adhering matter by ascertaining whether or not the pixel aggregate manifests specific shape-related characteristics. A pixel aggregate taking on a single color may be detected from the difference image through, for instance, edge detection processing, labeling processing or the like of the known art. The shape decision-making unit 35 makes individual decisions in regard to the aspect ratio, the fill ratio (to be described in detail later), the area and the recession rate (to be described in detail later) of the pixel aggregate and concludes that the pixel aggregate expresses an image of adhering matter if the decisions are all affirmative.

- Shape decision-making based upon the aspect ratio -

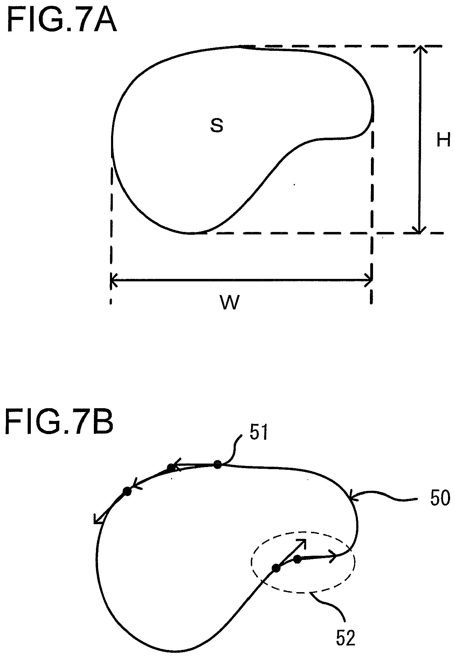

In reference to FIG. 7A, the shape decision-making executed based upon the aspect ratio will be described. The shape decision-making unit 35 calculates a ratio H/W of the length H of the photographic image of a pixel aggregate included in the difference image measured along the vertical axis, and the length W of the photographic image of the pixel aggregate measured along the horizontal axis, as an aspect ratio of the pixel aggregate. The shape decision-making unit 35 makes an affirmative decision in the aspect ratio-based shape decision-making if the aspect ratio H/W is equal to or greater than a predetermined threshold value Th1 and also equal to or less than a predetermined threshold value Th2. If, on the other hand, the aspect ratio H/W is less than the predetermined threshold value Th1 or greater than the predetermined threshold value Th2, the shape decision-making unit 35 makes a negative decision in the aspect ratio-based shape decision-making. The threshold values Th1 and Th2 are adjusted via the change detection unit 34 and the like.

- Shape decision-making based upon the fill ratio -

In reference to FIG. 7A, the shape decision-making executed based upon the fill ratio will be described. The shape decision-making unit 35 executing the fill ratio-based shape decision-making calculates a fill ratio as the ratio S/(HW) of the area S of a pixel aggregate included in the difference image to the product HW of the length H of the photographic image of the pixel aggregate measured along the vertical axis and the length W of the photographic image measured along the horizontal axis. The shape decision-making unit 35 then makes an affirmative decision in the fill ratio-based shape decision-making if the fill ratio S/(HW) is equal to or greater than a predetermined threshold value Th3 and also equal to or less than a predetermined threshold value Th4. If, on the other hand, the fill ratio S/(HW) is less than the predetermined threshold value Th3 or greater than the predetermined threshold value Th4, the shape decision-making unit 35 makes a negative decision in the fill ratio-based shape decision-making. The threshold values Th3 and Th4 are adjusted via the change detection unit 34 and the like.

- Shape decision-making based upon the area -

The shape decision-making executed based upon the area will be described next. The shape decision-making unit 35 makes an affirmative decision in the area-based decision-making if the area S of a pixel aggregate included in the difference image is equal to or greater than a predetermined threshold value Th5 and also equal to or less than the predetermined threshold value Th6. If, on the other hand, the area S is less than the predetermined threshold value Th5 or greater than the predetermined threshold value Th6, the shape decision-making unit 35 makes a negative decision in the area-based shape decision-making. The threshold values Th5 and Th6 are adjusted via the change detection unit 34 and the like.

- Shape decision-making executed based upon the recession rate -

In reference to FIG. 7B, the shape decision-making executed based upon the recession rate at an outline will be described. The shape decision-making unit 35 makes a decision with regard to the shape of a pixel aggregate included in the difference image based upon a change occurring in the direction of the tangent vector occurring as the outline of the pixel aggregate (e.g., an outline 50 in FIG. 7B) is sequentially traced from the uppermost point (e.g., a point 51 in FIG. 7B) of the pixel aggregate along the counterclockwise direction. As the outline of a pixel aggregate assuming a convex shape, e.g., a circular shape, is traced counterclockwise, the direction of the tangent vector changes along the counterclockwise direction. However, at a recessed area such as a recess 52 in FIG. 7B, the direction of the tangent vector may change along the clockwise direction.

The shape decision-making unit 35 calculates the outline tangent vector direction in correspondence to each pixel making up the outline of each pixel aggregate. FIG. 7B presents examples of some tangent vectors, the directions of which are calculated in conjunction with the outline 50 of the pixel aggregate. The shape decision-making unit 31 determines the direction of the tangent vector at each of the pixels forming the outline of each pixel aggregate in sequence along the outline of the pixel aggregate by tracing the outline in the counterclockwise direction and makes a decision as to whether the tangent vector rotates counterclockwise or clockwise by comparing the direction of the tangent vector with the direction of the tangent vector at the immediately preceding pixel. Once the outline of a given pixel aggregate is traced fully in the counterclockwise direction, the shape decision-making unit 35 calculates a recession rate $N/(M + N)$ by calculating the number of tangent vectors M that rotate along the counterclockwise direction and the number of tangent vectors N that rotate along the clockwise direction. The shape decision-making unit 35 makes an affirmative decision in the recession rate-based shape decision-making if the recession rate $N/(M + N)$, having been calculated for the particular pixel aggregate included in the difference image, is equal to or greater than a predetermined threshold value Th7 and also equal to or less than a predetermined threshold value Th8. If, on the other hand, the recession rate $N/(M + N)$ is less than the predetermined threshold value Th7 or greater than the predetermined threshold value Th8, the shape decision-making unit 35 makes a negative decision in the recession rate-based shape decision-making. The threshold values Th7 and Th8 are adjusted via the change detection unit 34 and the like.

The warning control unit 36 in FIG. 4 detects a white line on the road surface included in the photographic images and makes a decision as to whether or not the subject vehicle is likely to move out of the current lane based upon the position of the white line. If the decision-making results indicate that the subject vehicle is about to move out of the current lane, the warning control unit 36 outputs a control signal for the warning output unit 3, prompting the warning output unit 3 to output a warning.

The signal control unit 33 outputs a control signal for the cleaning control unit 5 based upon the positions and the quantities of the pixel aggregates having been concluded to be adhering matter by the shape decision-making unit 35. For instance, if the quantity of pixel aggregates, having been concluded to be adhering matter by the shape decision-making unit 35, is equal to or greater than a predetermined value (e.g., one), the signal control unit 33 outputs a control signal for the cleaning control unit 5, requesting that the adhering matter on the photographic lens be removed by engaging the air pump 6 or the washer pump 7 in operation.

In addition, provided, for instance, that there is a pixel aggregate, having been concluded to be adhering matter, present over the left half of the shielded image area, the signal control unit 33 controls the warning control unit 36 so that it stops outputting the control signal to the warning output unit 3 if the subject vehicle is determined to be likely to move out of the current lane toward the right side (the left side in the photographic images). In contrast, provided that there is a pixel aggregate, having been concluded to be adhering matter, present over the right half of the shielded image area, the signal control unit 33 controls the warning control unit 36 so that it stops outputting the control signal to the warning output unit 3 if the subject vehicle is determined to be likely to move out of the current lane toward the left side (the right side in the photographic images). Through these measures, the control signal output from the warning control unit 36 is restricted.

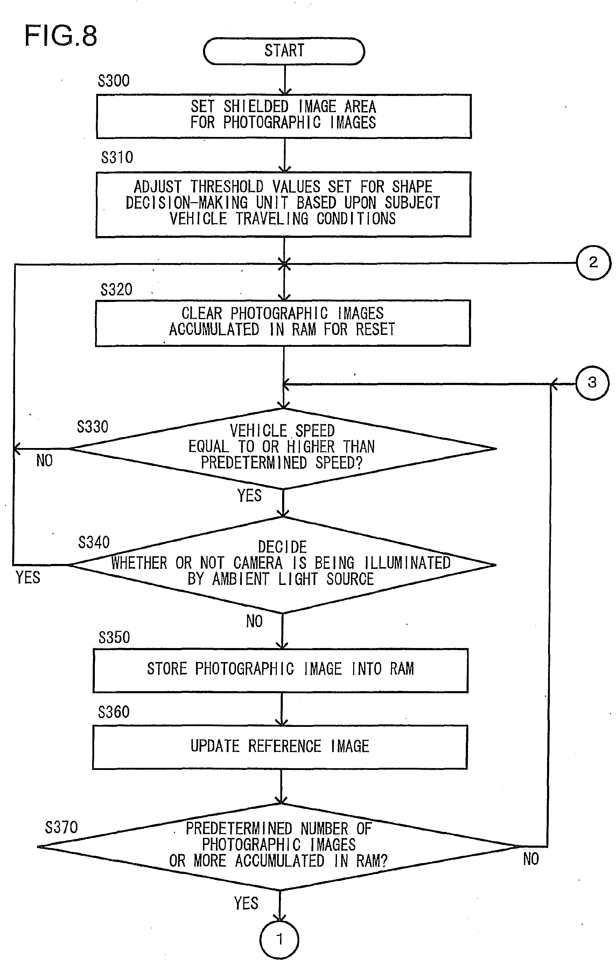

FIG. 8 presents a control flowchart pertaining to the control executed in a vehicle control device 200. The control processing in FIG. 8 is executed by the CPU 12 in the control unit 2 as directed in a control program stored in the ROM 11. In step S300, the CPU 12 sets the shielded image area for photographic images that are output from the camera 1 by controlling the shielded area-setting unit 31.

In step S310, the CPU 12 alters the threshold values set for the shape decision-making unit based upon the traveling conditions at the subject vehicle. For instance, upon obtaining, through CAN communication, information indicating that the subject vehicle is currently traveling off road from a navigation apparatus or the like (not shown), the control unit 2 adjusts the various threshold values Th1 through Th8 at the shape decision-making unit 35 to off-road traveling threshold values.

In step S320, the CPU 12 clears the photographic images having been stored in the RAM 10 for a reset. The CPU 12 also resets the reference image, the difference image and the like to the initial state.

In step S330, the CPU 12 obtains, through CAN communication, information indicating the subject vehicle speed and makes a decision as to whether or not the subject vehicle speed is equal to or higher than a predetermined speed (e.g., 30 km/h). Upon making an affirmative decision in step S330, the CPU 12 proceeds to execute the processing in step S340, whereas upon making a negative decision in step S330, it proceeds to execute the processing in step S320.

In step S340, the CPU 12 executes ambient light source decision-making by controlling the change detection unit 34. More specifically, the CPU 12 controls the ambient light source decision-making unit in the change detection unit 34 and makes an affirmative decision in step S340 if it is decided that the camera 1 is being illuminated with an ambient light source such as the headlights of a vehicle traveling behind the subject vehicle or a street lamp. Upon making an affirmative decision in step S340, the CPU 12 proceeds to execute the processing in step S320. In addition, the camera 1 may have a function of automatically adjusting the sensitivity or the like in correspondence to the ambient brightness. In such a case, the CPU 12 will also make an affirmative decision in step S340 after the sensitivity is adjusted in the camera 1, and will proceed to execute the processing in step S320. If, on the other hand, an affirmative decision is not made in step S340, the CPU 12 proceeds to execute the processing in step S350.

In step S350, the CPU 12 takes a photographic image having been output from the camera 1 into the RAM 10 for storage. In step S360, the CPU 12 controls the change detection unit 34 so as to have it generate a reference image through calculation.

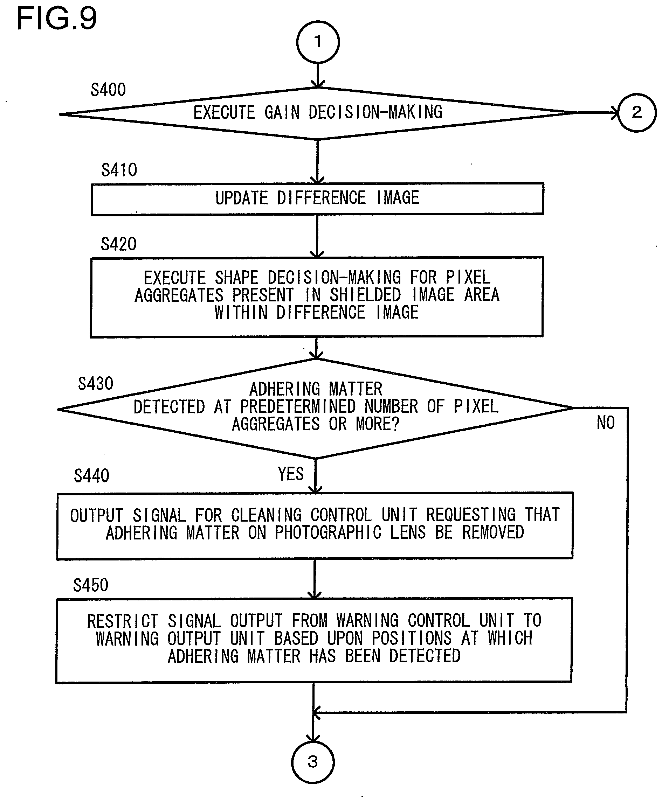

In step S370, the CPU 12 makes a decision as to whether or not the number of photographic images having accumulated into the RAM 10 is now equal to or greater than a predetermined value (e.g., four). Upon making an affirmative decision in step S370, the CPU 12 proceeds to execute the processing in step S400 in FIG. 9, whereas upon making a negative decision in step S370, it proceeds to execute the processing in step S330 in FIG. 8.

In step S400 in FIG. 9, the CPU 12 executes gain decision-making by controlling the change detection unit 34. If the sensitivity at the camera 1 has been altered, the CPU 12 makes an affirmative decision in step S400 and proceeds to execute the processing in step S320 in FIG. 8. If, on the other hand, the sensitivity at the camera 1 has not been altered, the CPU 12 proceeds to execute the processing in step S410 in FIG. 9.

In step S410, the CPU 12 updates the difference image based upon the photographic image having been stored in step S350 and the reference image having been updated in step S360 by controlling the change detection unit 34.

In step S420, the CPU 12 executes shape decision-making for pixel aggregates present within the shielded image area in the difference image by controlling the shape decision-making unit 35. The CPU 12 concludes that any pixel aggregate, with its aspect ratio, fill ratio, area and recession rate each following within the range defined by the corresponding specific threshold values, to be adhering matter.

In step S430, the CPU 12 makes a decision as to whether or not a predetermined minimum number of pixel aggregates have been detected as adhering matter through step S420. Upon making an affirmative decision in step S430, the CPU 12 proceeds to execute the processing in step S440, whereas upon making a negative decision in step S430, it proceeds to execute the processing in step S330.

In step S440, the CPU 12 outputs a signal for the cleaning control unit 5 requesting that the adhering matter settled on the photographic lens at the camera 1 be removed. In step S450, the CPU 12 restricts the signal output from the warning control unit 36 to the warning output unit 3 based upon the positions at which the adhering matter has been detected in step S420. Once the processing in step S450 is completed, the CPU 12 proceeds to execute the processing in step S330 in FIG. 8.

The following advantages are achieved through the embodiment described above. The in-vehicle apparatus 100 includes the camera 1, which outputs a photographic image of an area surrounding the vehicle, captured via the photographic lens, and a shielded area is formed within the photographing area of the camera 1 by the shielding plate 1a, as shown in FIG. 2. In addition, the in-vehicle apparatus 100 includes the control unit 2, which functions as an adhering matter detection unit 32. The adhering matter detection unit 32 detects adhering matter on the photographic lens based upon shielded images in a plurality of photographic images output from the camera 1 at different time points. The control unit 2 further functions as a signal control unit 33, which controls output signals based upon the detection results provided via the adhering matter detection unit 32. The in-vehicle control unit 100 configured with these structural components is able to detect adhering matter settled on the lens of the camera 1 in an optimal manner.

The adhering matter detection unit 32 includes a change detection unit 34, which generates a difference image based upon a plurality of shielded images and a shape decision-making unit 35, which makes a decision as to whether or not each pixel aggregate included in the difference image should be regarded as adhering matter based upon the shape of the pixel aggregate. Such use of the difference image over the shielded area for purposes of adhering matter detection ensures that adhering matter can be accurately detected regardless of how the scene outside the vehicle may change. In particular, the use of the difference image in the shielded area is particularly effective when detecting transparent adhering matter, since it will never be lost within an image of the scene (background) outside the vehicle.

As shown in FIG. 2, the camera 1 includes the shielding plate 1a, which forms a shielded area within the angle of view. The part of the shielding plate 1a that forms the shielded area is located further toward the subject relative to the photographic lens. As a result, adhering matter settled on the photographic lens is bound to appear in the shielded image with clarity, and, at the same time, it is ensured that the image of the scene outside the vehicle is not included in the shielded images.

The camera 1 photographs the surface of the road to the rear of the vehicle through the photographic lens. The shielding plate 1a is disposed so as to block light fluxes advancing from origins other than the road surface toward the photographic lens. Through these measures, the LDW function and the adhering matter detection are enabled at the same time.

If adhering matter is detected by the adhering matter detection unit 32 (step S430), the signal control unit 33 outputs a control signal for the cleaning control unit 5 requesting that the photographic lens be cleaned (step S440) and also restricts the signal output from the warning control unit 36 to the warning output unit 3 (step S450). Through these measures, the reliability of a warning issued through the LDW function is assured.

(Second Embodiment)

<Setting the shielded area for an image>

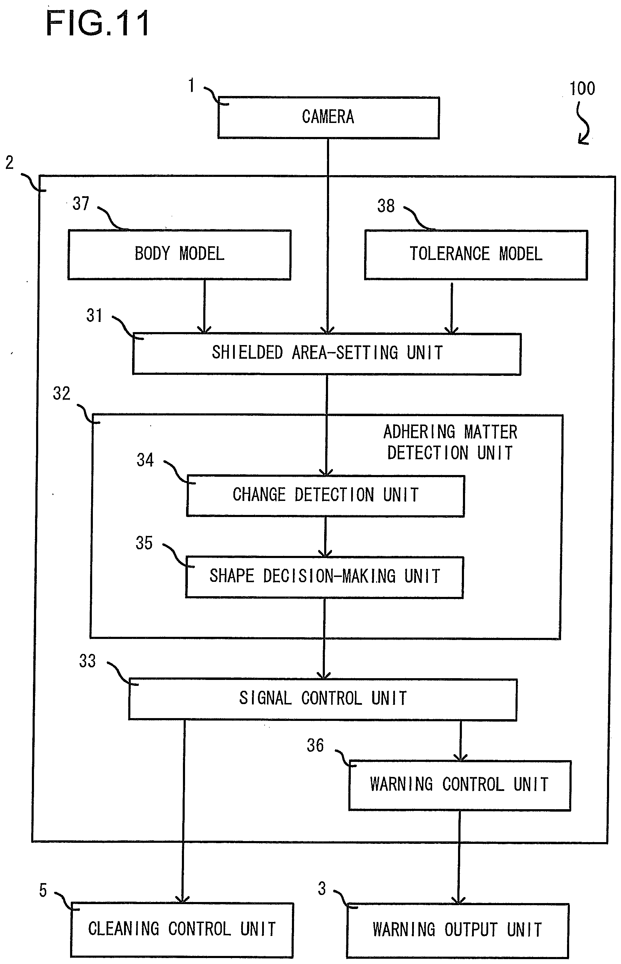

FIG. 11 is a control block diagram pertaining to control executed in the in-vehicle apparatus achieved in the second embodiment of the present invention. The second embodiment is distinguishable from the first embodiment in that a body model 37 describing the structural shapes and dimensions of the components of an automobile and the camera and a tolerance model 38 describing the mounting tolerance with which the various structural components can be mounted are input to the shielded area-setting unit 31, as shown in FIG. 11.

The concept of "mounting tolerance" will be first explained. A screw with a diameter R [mm], for instance, cannot be mounted at a screw hole R [mm] in diameter, since the screw cannot be turned in such a screw hole. In addition, a certain extent of variance must be allowed in the screw machining accuracy. With these factors taken into consideration, the screw hole will need to be formed so as to achieve a diameter of $(R + \alpha)$ [mm]. Furthermore, the screw hole machining accuracy, too, is bound to manifest some variance, and thus, the diameter of the finished screw hole will fall within the range of $(R + \alpha - \beta)$ [mm] through $(R + \alpha + \beta)$ [mm]. The screw/screw hole assembly, achieved by inserting the screw with the R [mm] diameter into this screw hole, is then bound to manifest a specific range of deviation. This range of deviation is commonly referred to as mounting tolerance, which can be calculated based upon the design values. In addition, when a plurality of components are assembled together, the tolerance will be calculated as a cumulative value and is thus bound to take a large value. Such cumulative tolerance can also be calculated based upon the design values.

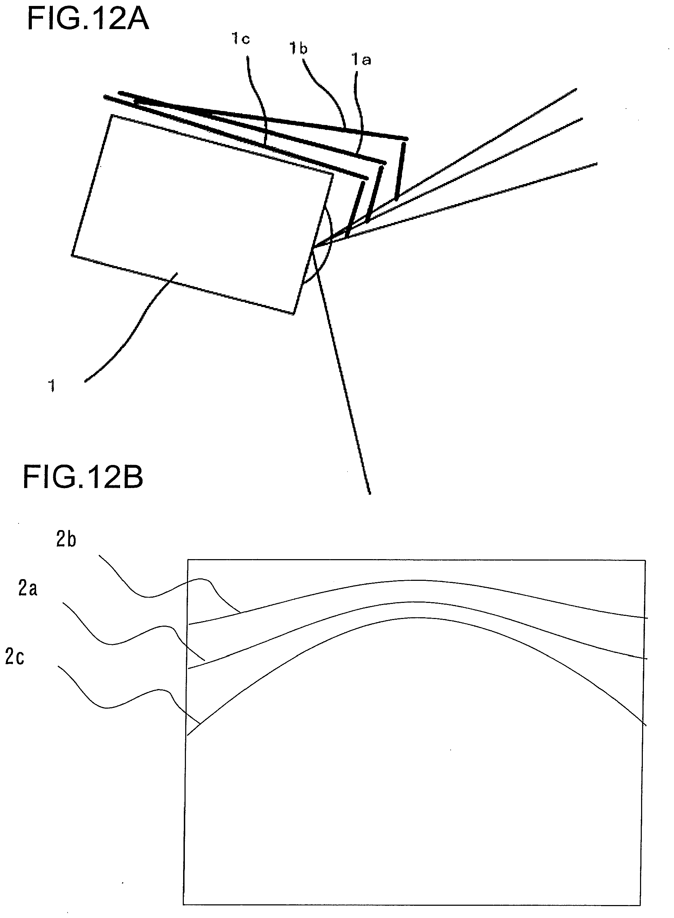

Assuming that the shielding plate 1a is mounted at the camera 1, as shown in FIGS. 12A and 12B, the shapes of the camera, the shielding plate 1a and the bumper portion, their dimensions and the standard mounting conditions under which they are normally mounted, are described in the body model 32. In addition, the extents to which the positions of the camera 1 and the shielding plate 1a and their relative angles may deviate under the standard mounting conditions are described in the tolerance model 38.

Based upon the tolerance model 38, a shielding plate position 1b, at which the shielding plate boundary appears to have risen to a maximum height on an image captured by the camera, and a shielding plate position 1c, at which the shielding plate boundary appears to have descended to a minimum height on the image captured by the camera, can be ascertained. These shielding plate boundaries appearing on the image will be referred to as an upper-limit shielding plate boundary 2b and a lower limit shielding plate boundary 2c. The shielding plate assumes a shielding plate boundary 2a under the standard mounting conditions. Since the shielding plate and the camera are set apart from each other over different distances, as indicated in the figure, the shape of the boundary line, too, changes from one shielding plate position to another.

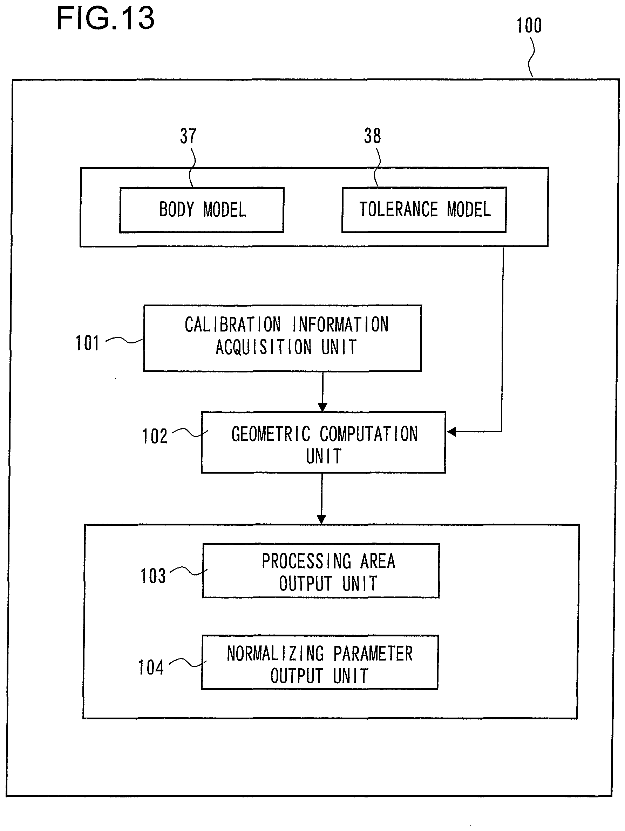

FIG. 13 is a control block diagram representing an example of control that may be executed for the shielded area-setting unit 31. The in-vehicle apparatus 100 in FIG. 13 includes a geometric computation unit 102, capable of calculating the range over which the shielding plate area may appear on an image based upon the body model 37 and the tolerance model 38 input thereto. The geometric computation unit 102 is able to calculate the position at which the shielding plate boundary is projected onto the image sensor through a method of perspective projection of the known art based upon, for instance, the focal length of the camera, the image sensor size and a lens distortion model. As explained earlier, the shielding plate area cannot be univocally determined through geometric computation alone, but rather, there is bound to be a degree of uncertainty with regard to the position of the shielding plate area because of the tolerance. Accordingly, an accurate shielding plate boundary is determined through calculation by using a video image provided by the camera while the vehicle is in a traveling state. A specific image processing method adopted for purposes of shielding plate boundary calculation will be described in detail later.

The geometric computation unit 102 further determines a body area boundary of the subject vehicle, defined by the bumper, the finisher and the like, by using information provided via a calibration information acquisition unit 101 and the body model 37. It is to be noted that the calibration information used by the geometric computation unit 102 indicates the relation of a camera coordinate system to a body coordinate system, calculated by determining the camera coordinate system relative to a real-world coordinate system based upon the relation of the body coordinate system to the real-world coordinate system that is already known.

A processing area output unit 103 calculates an image area to be used for purposes of image recognition based upon the exact shielding plate boundary and the body area boundary having been determined by the geometric computation unit 102 and outputs the image area thus calculated. In the adhering matter detection logic adopted in this embodiment, transparent and semitransparent adhering matter is detected by designating the shielded area as the processing target so as to prevent erroneous detection attributable to ambient light and background objects. It is to be noted that when a given pixel is present astride the shielding plate area and the background area (containing the road surface, the sky, another vehicle and the like), the adverse effect of ambient light and background objects on the detection processing can be minimized by taking the particular pixel out of the processing target area. Accordingly, a raster scan is executed when calculating the image area to be used for image recognition and the processing area is created by taking any pixel present on the shielding plate boundary in the captured image out of the processing target area and including each pixel present strictly in the shielding plate area inside the shielding plate boundary in the processing target area. The processing area output unit 103 may output the image area thus calculated in the form of, for instance, a mask image.

In addition, a normalizing parameter output unit 104 outputs areal size of the processing area, output by the processing area output unit 103, to the adhering matter detection logic. The areal size of the processing area output by the processing area output unit 103 changes from one body to another, and accordingly, any variance in the sensitivity with which adhering matter is detected can be minimized by informing the adhering matter detection logic of the areal size of the processing area.

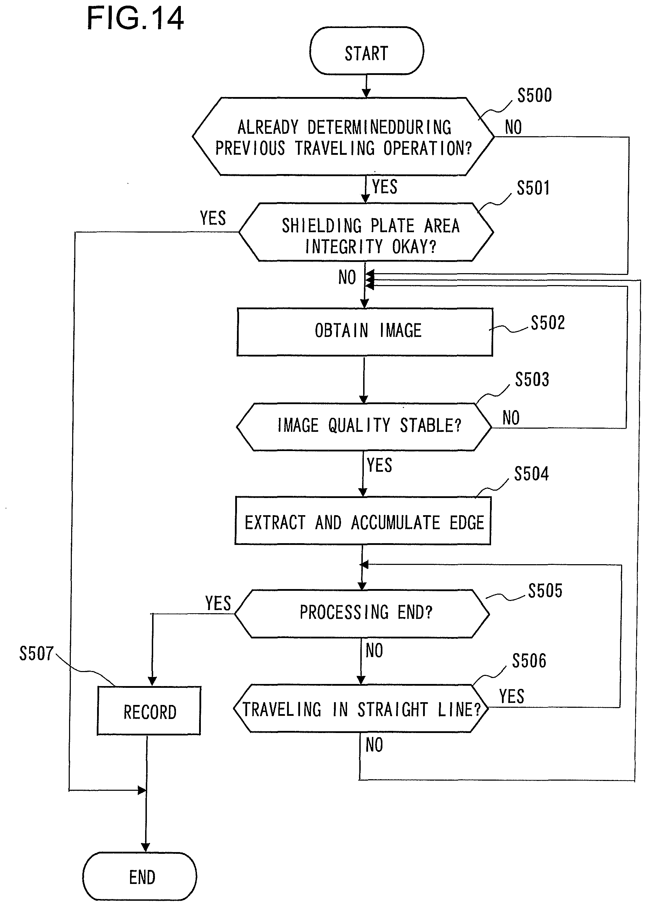

Next, in reference to FIG. 14, the flow of the processing executed to calculate the shielding plate area boundary will be described. First, in step S500, a decision is made as to whether or not shielding plate area calculation was completed when the vehicle was most recently in a traveling state. This decision may be made by determining whether or not shielding plate area information, which may be recorded in a flash-ROM (not shown), can be read out. If the calculation was completed ("yes" in step S500), the operation proceeds to step S501 to make a decision as to whether or not the shielding plate area information, having been recorded in the flash-ROM, is normal information. However, if it is decided that the calculation was not completed ("no" in step S500), the operation proceeds to execute shielding plate area extraction processing.

In step S501, the integrity of the shielding plate area, having been calculated through the previous processing session, is verified to ensure that the shielding plate area was not formed incorrectly. This verification is executed by first reading the shielding plate area recorded in the flash-ROM (not shown) and then determining whether or not the shielded area boundary is contained within the range defined by the maximum tolerance and the minimum tolerance or whether or not the position of the shielding plate shifted due to an impact or the like to which the camera may having been subjected. Any shift in the shielding plate position may be detected by scanning the image for edge positions in the vicinity of the boundary of the shielding plate area and ascertaining the rate at which the edge positions match the shielding plate boundary. If the integrity of the shielding plate area, having been formed through the previous processing session, is deemed acceptable ("yes" in step S501), the shielding plate area that has been read can be used for the subsequent processing and accordingly, the shielding plate area boundary calculation ends.

In the shielding plate area boundary calculation processing, an image is read from the camera in step S502 first.

Next, in step S503, a decision is made as to whether or not a shielding plate area can be formed under the current conditions. An affirmative decision should be made in this step if at least one of the following conditions is satisfied; the day/night decision-making results indicate daytime, the extent of lens cloudiness (uncleanness) is represented by a value equal to or less than a predetermined threshold value, the subject vehicle is currently traveling at a speed equal to or higher than a specific speed, no direct sunlight or headlight from a vehicle traveling behind the subject vehicle is entering the lens, and it is not raining.

Then, in step S504, edges in the image are extracted and the edge images are accumulated. The edge images are accumulated by adding the counter value for the corresponding storage array element to the coordinates of each pixel manifesting an edge intensity within a predetermined range. A shielding plate boundary can then be calculated by fitting a polynomial curve representing the shielding plate boundary calculated based upon the body model 37 at array elements indicating counter values exceeding a specific value. A special explanation of such curve approximation will not be provided, since it can be executed by adopting a technology of the known art.

In addition, in step S505, a decision is made as to whether or not the system is shutting down. This decision-making may be triggered as the engine is turned off or the power to the ECU is cut off. As a result, the interim report of the shielding plate position calculation, having been underway at the time of system shutdown, can be recorded in step S507 and the length of time required for the shielding plate position calculation executed at a subsequent startup can be reduced. As an alternative, the system may be determined to be shutting down when a predetermined number of sets of data are collected in the storage array created in step S504. In such a case, the shielding plate mask creation can be completed as soon as enough data are accumulated, which will hasten the timing with which the adhering matter detection is executed.

In step S506, a decision is made as to whether or not the subject vehicle is traveling in a straight line along one direction by monitoring the vehicle speed and the steering angle. If it is decided that the subject vehicle is traveling in a straight line, the execution of the processing in step S504 is temporarily suspended and until the traveling direction is changed, only the processing in steps S505 and step S506 is executed. In other words, when the subject vehicle is traveling in a straight line, shadows, sunlight and the like may make it difficult to extract the shielding plate area accurately. Accordingly, images and characteristic quantities are accumulated gradually while the subject vehicle travels along various directions so as to ensure that the shielding plate area is created accurately and reliably.

In step S507, the details of the edge storage array and the shielding plate boundary information obtained through the curve approximation are recorded into a recording device such as the flash-ROM (not shown).

By adopting the structure characterizing the second embodiment as described above, an advantage is achieved in that the optimal shielded area can be calculated for each vehicle by taking into consideration the tolerance. Furthermore, with the shielding plate set in the optimal area, better detection capability for adhering matter detection is assured. Moreover, even if the shielding plate becomes shifted due to an impact or the like, it can be repositioned to the optimal shielding plate area by verifying whether or not the contents of the image output from the camera are consistent with the recorded information.

**Claims**

1. An in-vehicle apparatus, comprising:

    a camera (1) with a shielded area formed within a photographing area thereof by a light shielding member, which outputs a photographic image of an area surrounding a vehicle photographed through a photographic lens, the photographic image including an image of the shielded area; and
    an adhering matter detection unit that detects adhering matter settled on the photographic lens based upon images of the shielded area included in a plurality of photographic images output from the camera at different time points, wherein:

    at the camera (1), the light shielding member is disposed so that the camera (1) is able to photograph a road surface outside the vehicle while light advancing from an origin other than the road surface toward the photographic lens is blocked; **characterized in that**
    the adhering matter detection unit generates a difference image based upon the images of the shielded area included in the plurality of photographic images output from the camera at the different time points, detects an aggregate of pixels expressing a single color contained in the difference image, and detects the aggregate of pixels as the adhering matter based on an aspect ratio, a fill ratio, an area and a recession rate of the aggregate of pixels.

2. An in-vehicle apparatus according to claim 1, further comprising:

    a warning output unit (3) that outputs a warning; and
    a warning control unit (36) that outputs a signal for the warning output unit (3) so as to cause a warning to be output by the warning output unit (3) when the vehicle is determined, based upon a white line on the road surface included in the photographic images, to be about to move out of a current lane, wherein:
    the signal control unit (33) restricts output of the signal from the warning control unit (36) to the warning output unit (3) when the adhering matter detection unit detects the adhering matter.

3. An in-vehicle apparatus according to claim 1 or 2, further comprising:

an adhering matter removing unit engaged in operation for removing adhering matter settled on the photographic lens; and

a cleaning control unit (5) that controls the operation of the adhering matter removing unit, wherein:

the signal control unit (33) outputs a signal for the cleaning control unit (5) so as to engage the adhering matter removing unit in operation when the adhering matter detection unit detects the adhering matter.

4. An in-vehicle apparatus according to any one of claims 1 through 3, further comprising:

a geometric computation unit that calculates the shielded area based upon a body model including structural shapes and dimensions of components of the vehicle and the camera and a tolerance model including mounting tolerances with which the components can be mounted, both stored in advance.

5. An in-vehicle apparatus according to any one of claims 1 through 4, further comprising:

a signal control unit (33) that controls output signals based upon detection results provided by the adhering matter detection unit.

**Patentansprüche**

1. Fahrzeuginterne Vorrichtung, die Folgendes umfasst:

eine Kamera (1) mit einem abgeschirmten Bereich, der in einem Photographierbereich hiervon durch ein Lichtabschirmelement gebildet ist, die ein durch eine photographische Linse photographiertes photographisches Bild eines Bereichs, der ein Fahrzeug umgibt, ausgibt, wobei das photographische Bild ein Bild des abgeschirmten Bereichs enthält; und

eine Detektionseinheit für anhaftendes Material, die anhaftendes Material, das sich auf der photographischen Linse abgesetzt hat, aufgrund von Bildern des abgeschirmten Bereichs, die in mehreren photographischen Bildern enthalten sind, die von der Kamera zu verschiedenen Zeitpunkten ausgegeben werden, detektiert, wobei das Lichtabschirmelement bei der Kamera (1) angeordnet ist, derart, dass die Kamera (1) in der Lage ist, eine Fahrbahnoberfläche außerhalb des Fahrzeugs zu photographieren, während Licht, das sich von einem von der Fahrbahnoberfläche verschiedenen Ausgangspunkt zu der photographischen Linse ausbreitet, blockiert wird; **dadurch gekennzeichnet, dass**

die Detektionseinheit für anhaftendes Material ein Differenzbild auf der Grundlage der Bilder des abgeschirmten Bereichs, die in den mehreren photographischen Bildern, die von der Kamera zu den verschiedenen Zeitpunkten ausgegeben werden, enthalten sind, erzeugt, eine Ansammlung von Bildpunkten, die eine einzelne Farbe ausdrücken, die in dem Differenzbild enthalten ist, detektiert und die Ansammlung von Bildpunkten auf der Grundlage eines Seitenverhältnisses, eines Füllverhältnisses, eines Bereichs und einer Rückgangrate der Ansammlung von Bildpunkten als das anhaftende Material detektiert.

2. Fahrzeuginterne Vorrichtung nach Anspruch 1, die ferner Folgendes umfasst:

eine Warnungsausgabeeinheit (3), die eine Warnung ausgibt; und

eine Warnungssteuereinheit (36), die ein Signal für die Warnungsausgabeeinheit (3) ausgibt, um zu bewirken, dass eine Warnung von der Warnungsausgabeeinheit (3) ausgegeben wird, wenn auf der Grundlage einer weißen Linie auf der Fahrbahnoberfläche, die in den photographischen Bildern enthalten ist, bestimmt wird, dass ein Verlassen der aktuellen Spur durch das Fahrzeug kurz bevorsteht, wobei die Signalsteuereinheit (33) das Ausgeben des Signals von der Warnungssteuereinheit (36) an die Warnungsausgabeeinheit (3) beschränkt, wenn die Detektionseinheit für anhaftendes Material das anhaftende Material detektiert.

3. Fahrzeuginterne Vorrichtung nach Anspruch 1 oder 2, die ferner Folgendes umfasst:

eine Entfernungseinheit für anhaftendes Material, die an dem Vorgang zum Entfernen anhaftenden Materials, das sich auf der photographischen Linse angesammelt hat, beteiligt ist; und

eine Reinigungssteuereinheit (5) die den Betrieb der Entfernungseinheit für anhaftendes Material steuert, wobei die Signalsteuereinheit (33) ein Signal für die Reinigungssteuereinheit (5) ausgibt, um die Entfernungseinheit für anhaftendes Material an dem Vorgang zu beteiligen, wenn die Detektionseinheit für anhaftendes Material das anhaftende Material detektiert.

**4.** Fahrzeuginterne Vorrichtung nach einem der Ansprüche 1 bis 3, die ferner Folgendes umfasst:
eine geometrische Recheneinheit, die den abgeschirmten Bereich auf der Grundlage eines Körpermodells, das strukturelle Formen und Dimensionen von Komponenten des Fahrzeugs und der Kamera enthält, und eines Toleranzmodells, das Befestigungstoleranzen enthält, mit denen die Komponenten angebracht werden können, die beide im Voraus gespeichert werden, berechnet.

**5.** Fahrzeuginterne Vorrichtung nach einem der Ansprüche 1 bis 4, die ferner Folgendes umfasst:
eine Signalsteuereinheit (33), die Ausgangssignale auf der Grundlage von Detektionsergebnissen, die von der Detektionseinheit für anhaftendes Material bereitgestellt werden, steuert.

**Revendications**

**1.** Appareil embarqué sur véhicule, comprenant :

une caméra (1) avec une zone masquée formée à l'intérieur d'une zone de photographie de celle-ci par un élément de masquage de lumière, qui fournit une image photographique d'une zone entourant un véhicule, photographiée via une lentille photographique, l'image photographique incluant une image de la zone masquée ; et
une unité de détection de matières adhérentes qui détecte des matières adhérentes qui se sont posées sur la lentille photographique en se basant sur des images de la zone masquée inclues dans une pluralité d'images photographiques fournies par la caméra à différents instants, dans lequel :

au niveau de la caméra (1), l'élément de masquage de lumière est disposé de telle façon que la caméra (1) est capable de photographier une surface routière à l'extérieur du véhicule alors que la lumière qui avance depuis une origine autre que la surface routière vers la lentille photographique est bloquée ;
**caractérisé en ce que**
l'unité de détection de matières adhérentes génère une image différentielle sur la base des images de la zone masquée incluses dans la pluralité d'images photographiques fournies par la caméra aux différents instants, elle détecte un agglomérat de pixels exprimant une couleur unique contenue dans l'image différentielle, et elle détecte l'agglomérat de pixels comme étant les matières adhérentes sur la base d'un rapport d'aspect, d'un rapport de remplissage, d'une superficie et d'un taux de récession de l'agglomérat de pixels.

**2.** Appareil embarqué sur véhicule selon la revendication 1, comprenant en outre :

une unité de sortie d'avertissement (3) qui fournit un avertissement ; et
une unité de commande d'avertissement (36) qui fournit un signal pour l'unité de sortie d'avertissement (3) de manière à amener l'unité de sortie d'avertissement (3) à fournir un avertissement quand il est déterminé que le véhicule, sur la base d'une ligne blanche sur la surface routière incluse dans
les images photographiques, est sur le point de se déplacer hors d'une voie actuelle, dans lequel :
l'unité de commande de signal (33) restreint la fourniture du signal depuis l'unité de commande d'avertissement (36) à l'unité de sortie d'avertissement (3) quand l'unité de détection de matières adhérentes détecte les matières adhérentes.

**3.** Appareil embarqué sur véhicule selon la revendication 1 ou 2, comprenant en outre :

une unité de suppression de matières adhérentes engagée en fonctionnement pour supprimer les matières adhérentes qui se sont posées sur la lentille photographique ; et
une unité de commande de nettoyage (5) qui commande de fonctionnement de l'unité de suppression de matières adhérentes, dans lequel :
l'unité de commande de signal (33) fournit un signal pour l'unité de commande de nettoyage (5) de façon à engager l'unité de suppression de matières adhérentes en fonctionnement quand l'unité de détection de matières adhérentes a détecté les matières adhérentes.

**4.** Appareil embarqué sur véhicule selon l'une quelconque des revendications 1 à 3, comprenant en outre :
une unité de calcul géométrique qui calcule la zone masquée sur la base d'un modèle corporel incluant des formes structurelles et des dimensions des composants du véhicule et de la caméra, et d'un modèle de tolérances incluant des tolérances de montage avec lesquelles les composants peuvent être montés, les deux modèles étant stockés à l'avance.

5. Appareil embarqué sur véhicule selon l'une quelconque des revendications 1 à 4, comprenant en outre :
une unité de commande de signal (33) qui commande les signaux de sortie sur la base de résultats de détection fournis par l'unité de détection de matières adhérentes.

# FIG.1

CAN COMMUNICATION

2 — CONTROL UNIT

10 — R A M

11 — R O M

12 — C P U

3 — WARNING OUTPUT UNIT

4 — OPERATING STATE REPORTING UNIT

1 — CAMERA

1a

100

5 — CLEANING CONTROL UNIT

6 — AIR PUMP

8 — AIR NOZZLE

7 — WASHER PUMP

9 — WASHER NOZZLE

EP 2 682 896 B1

# FIG.2

SHIELDED AREA

PHOTOGRAPHING AREA

1a

1

# FIG.3

# FIG.4

```
                                    100
        1
     ┌──────────────────┐
     │     CAMERA        │
     └──────────────────┘
  2          │
  ┌──────────┼────────────────────────────────────┐
  │  31      ▼                                      │
  │  ┌────────────────────────────────────┐        │
  │  │   SHIELDED AREA-SETTING UNIT        │        │
  │  └────────────────────────────────────┘        │
  │  32          │        ADHERING MATTER           │
  │  ┌───────────┼────────DETECTION UNIT──────┐     │
  │  │  34       ▼                            │     │
  │  │  ┌──────────────────────────────┐      │     │
  │  │  │   CHANGE DETECTION UNIT       │      │     │
  │  │  └──────────────────────────────┘      │     │
  │  │  35          │                         │     │
  │  │  ┌───────────▼──────────────────┐      │     │
  │  │  │   SHAPE DECIDING UNIT         │      │     │
  │  │  └──────────────────────────────┘      │     │
  │  └───────────────┼─────────────────────── ┘     │
  │  33              ▼                               │
  │  ┌────────────────────────────────────┐         │
  │  │     SIGNAL CONTROL UNIT             │         │
  │  └────────────────────────────────────┘         │
  │      │                      36   │              │
  │      │                      ┌────▼────────────┐ │
  │      │                      │ WARNING CONTROL │ │
  │      │                      │      UNIT       │ │
  │      │                      └─────────────────┘ │
  └──────┼──────────────────────────────┼──────────┘
   5     ▼                     3        ▼
  ┌──────────────────┐        ┌──────────────────┐
  │ CLEANING CONTROL │        │ WARNING OUTPUT   │
  │      UNIT        │        │      UNIT        │
  └──────────────────┘        └──────────────────┘
```

FIG.5

41

43          42          44

# FIG.6

EP 2 682 896 B1

FIG.7A

FIG.7B

# FIG.8

START

S300
SET SHIELDED IMAGE AREA
FOR PHOTOGRAPHIC IMAGES

S310
ADJUST THRESHOLD VALUES SET FOR SHAPE
DECISION-MAKING UNIT BASED UPON SUBJECT
VEHICLE TRAVELING CONDITIONS

②

S320
CLEAR PHOTOGRAPHIC IMAGES
ACCUMULATED IN RAM FOR RESET

③

S330
VEHICLE SPEED
EQUAL TO OR HIGHER THAN
PREDETERMINED SPEED?

NO

YES

S340
DECIDE
WHETHER OR NOT CAMERA IS BEING ILLUMINATED
BY AMBIENT LIGHT SOURCE

YES

NO

S350
STORE PHOTOGRAPHIC IMAGE INTO RAM

S360
UPDATE REFERENCE IMAGE

S370
PREDETERMINED NUMBER OF
PHOTOGRAPHIC IMAGES
OR MORE ACCUMULATED IN RAM?

NO

YES

①

# FIG.9

① 1

**S400** ⟨ EXECUTE GAIN DECISION-MAKING ⟩ → ② 2

**S410** UPDATE DIFFERENCE IMAGE

**S420** EXECUTE SHAPE DECISION-MAKING FOR PIXEL AGGREGATES PRESENT IN SHIELDED IMAGE AREA WITHIN DIFFERENCE IMAGE

**S430** ⟨ ADHERING MATTER DETECTED AT PREDETERMINED NUMBER OF PIXEL AGGREGATES OR MORE? ⟩ NO

YES

**S440** OUTPUT SIGNAL FOR CLEANING CONTROL UNIT REQUESTING THAT ADHERING MATTER ON PHOTOGRAPHIC LENS BE REMOVED

**S450** RESTRICT SIGNAL OUTPUT FROM WARNING CONTROL UNIT TO WARNING OUTPUT UNIT BASED UPON POSITIONS AT WHICH ADHERING MATTER HAS BEEN DETECTED

③ 3

# FIG.10A

# FIG.10B

# FIG.11

```
                        1 ⌇        CAMERA              100 ⌇
  2 ⌇  ┌──────────────────────┼────────────────────────────────┐
       │  37 ⌇              38 ⌇                                 │
       │  ┌──────────────┐   ┌──────────────────────┐           │
       │  │  BODY MODEL  │   │   TOLERANCE MODEL     │           │
       │  └──────┬───────┘   └──────────┬───────────┘           │
       │  31 ⌇   │           │           │                       │
       │  ┌──────┴───────────┴───────────┴───────────┐          │
       │  │        SHIELDED AREA-SETTING UNIT          │          │
       │  └────────────────────┬───────────────────────┘          │
       │  32 ⌇                  │            ADHERING MATTER        │
       │  ┌────────────────────┼──────────  DETECTION UNIT ──────┐ │
       │  │   34 ⌇             │                                 │ │
       │  │  ┌─────────────────┴────────────────────┐           │ │
       │  │  │       CHANGE DETECTION UNIT           │           │ │
       │  │  └─────────────────┬────────────────────┘           │ │
       │  │   35 ⌇             │                                 │ │
       │  │  ┌─────────────────┴────────────────────┐           │ │
       │  │  │     SHAPE DECISION-MAKING UNIT        │           │ │
       │  │  └──────────────────────────────────────┘           │ │
       │  └────────────────────┬─────────────────────────────────┘ │
       │  33 ⌇                  │                                   │
       │  ┌─────────────────────┴──────────────────────┐          │
       │  │           SIGNAL CONTROL UNIT                │          │
       │  └───────┬──────────────────────┬──────────────┘          │
       │          │           36 ⌇       │                         │
       │          │          ┌───────────┴──────────┐              │
       │          │          │  WARNING CONTROL UNIT │              │
       │          │          └───────────┬──────────┘              │
       └──────────┼──────────────────────┼─────────────────────────┘
  5 ⌇             │          3 ⌇         │
  ┌───────────────┴──────┐   ┌───────────┴──────────┐
  │ CLEANING CONTROL UNIT│   │  WARNING OUTPUT UNIT │
  └──────────────────────┘   └──────────────────────┘
```

24

## FIG.12A

1c  1b  1a

1

## FIG.12B

2b

2a

2c

# FIG.13

100

```
┌─────────────────────────────────────────────────────────┐
│                                                         │
│        37                          38                   │
│   ┌────────────────────────────────────────────┐        │
│   │  ┌──────────────┐      ┌──────────────────┐ │        │
│   │  │  BODY MODEL  │      │  TOLERANCE MODEL │ │        │
│   │  └──────────────┘      └──────────────────┘ │        │
│   └────────────────────────────────────────────┘        │
│                                                         │
│         ┌──────────────────────────────┐                │
│   101   │  CALIBRATION INFORMATION      │                │
│         │     ACQUISITION UNIT          │                │
│         └──────────────────────────────┘                │
│                        │                                │
│                        ▼                                │
│   102   ┌──────────────────────────────┐                │
│         │  GEOMETRIC COMPUTATION        │◄───            │
│         │         UNIT                  │                │
│         └──────────────────────────────┘                │
│                        │                                │
│                        ▼                                │
│   ┌─────────────────────────────────────────┐           │
│   │      ┌──────────────────────────┐        │           │
│   │ 103  │   PROCESSING AREA        │        │           │
│   │      │    OUTPUT UNIT           │        │           │
│   │      └──────────────────────────┘        │           │
│   │                                          │           │
│   │      ┌──────────────────────────┐        │           │
│   │ 104  │  NORMALIZING PARAMETER    │        │           │
│   │      │    OUTPUT UNIT           │        │           │
│   │      └──────────────────────────┘        │           │
│   └─────────────────────────────────────────┘           │
│                                                         │
└─────────────────────────────────────────────────────────┘
```

# FIG.14

START

S500
ALREADY DETERMINEDDURING
PREVIOUS TRAVELING OPERATION?    NO

↓YES    S501

SHIELDING PLATE AREA
INTEGRITY OKAY?    YES

NO

OBTAIN IMAGE    S502

IMAGE QUALITY STABLE?    S503    NO

YES

EXTRACT AND ACCUMULATE EDGE    S504

PROCESSING END?    S505    YES

NO    S506

TRAVELING IN STRAIGHT LINE?    YES

NO

S507    RECORD

END

**EP 2 682 896 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003044863 A
- JP 2012038048 A
- JP 2005162168 A